# EUROPÄISCHE PATENTANMELDUNG

(11) **EP 3 945 675 A1**
(43) Veröffentlichungstag der Anmeldung: **02.02.2022**
(21) Anmeldenummer: 20188704.9
(22) Anmeldetag: 30.07.2020
(51) Int. Cl.: H02M 5/458, H02M 7/797, H02M 7/539, H02M 7/538, H02M 1/44, H02M 1/00

(54) **STROMRICHTER UND VERFAHREN ZUM BETREIBEN EINES STROMRICHTERS**

(71) Anmelder: Siemens Aktiengesellschaft, 80333 München (DE)
(72) Erfinder: Junghänel, René, 91054 Erlangen (DE); Nieberlein, Klaus, 90471 Nürnberg (DE)

(57) **Zusammenfassung**

Die Erfindung betrifft ein Verfahren zum Betreiben eines Stromrichters (7) als Wechselrichter zwischen einer Gleichspannung (U) und einem Wechselspannungsnetz (1), wobei der Stromrichter (7) für jede Wechselspannungsphase des Wechselspannungsnetzes (1) wenigstens eine mit der Wechselspannungsphase verbundene Halbbrücke (B1, B2, B3) mit zwei Halbleiterschaltern (SP1, SP2, SP3, SN1, SN2, SN3) aufweist und jeder Halbleiterschalter (SP1, SP2, SP3, SN1, SN2, SN3) antiparallel zu einer Diode (DP1, DP2, DP3, DN1, DN2, DN3) geschaltet ist. Bei dem Verfahren wird für jeden Halbleiterschalter (SP1, SP2, SP3, SN1, SN2, SN3) innerhalb einer Winkelperiode ein Aktivierungswinkelintervall (A12, A13, A23, A21, A31, A32, A1, A2) bestimmt, dessen untere Intervallgrenze durch Subtraktion eines Vorzündwinkels (α) von der unteren Bereichsgrenze eines Schalterwinkelbereichs (W12, W13, W23, W21, W31, W32, W1, W2) gebildet wird und dessen obere Intervallgrenze durch Subtraktion eines Vorlöschwinkels (β) von der oberen Bereichsgrenze des Schalterwinkelbereichs (W12, W13, W23, W21, W31, W32, W1, W2) gebildet wird.

## Beschreibung

Die Erfindung betrifft einen Stromrichter und ein Verfahren zum Betreiben eines Stromrichters als Wechselrichter zwischen einer Gleichspannung mit einem Hochpotential und einem Niederpotential und einem Wechselspannungsnetz. Der Stromrichter weist für jede Wechselspannungsphase des Wechselspannungsnetzes wenigstens eine mit der Wechselspannungsphase verbundene Halbbrücke mit einem hochpotentialseitigen Halbleiterschalter und einem niederpotentialseitigen Halbleiterschalter auf, wobei jeder Halbleiterschalter antiparallel zu einer Diode geschaltet ist.

Insbesondere betrifft die Erfindung einen netzseitigen derartigen Stromrichter eines Umrichters, der im Normalbetrieb einen Elektromotor mit Energie aus dem Wechselspannungsnetz versorgt. Bei dieser Betriebsweise wird der netzseitige Stromrichter als Gleichrichter betrieben, der eine Wechselspannung des Wechselspannungsnetzes durch die Dioden gleichrichtet, wobei die Halbleiterschalter nicht angesteuert werden. Ein lastseitiger Stromrichter des Umrichters erzeugt dann die Wechselspannung für den Elektromotor.

Ein derartiger Umrichter kann jedoch auch in einem rückspeisenden Betrieb zum Rückspeisen elektrischer Energie, die in einem generatorischen Betrieb von dem Elektromotor erzeugt wird, in das Wechselspannungsnetz betrieben werden. Bei dieser Betriebsweise wird der lastseitige Stromrichter des Umrichters als Gleichrichter zum Gleichrichten einer von dem Elektromotor generatorisch erzeugten Wechselspannung betrieben und der netzseitige Stromrichter des Umrichters wird als Wechselrichter zum Erzeugen des in das Wechselspannungsnetz rückzuspeisenden Wechselstroms mit der Netzfrequenz des Wechselspannungsnetzes betrieben. Dabei werden die Halbleiterschalter des netzseitigen Stromrichters in Abhängigkeit von der Phasenlage der Wechselspannungsphasen des Wechselspannungsnetzes angesteuert. Beispielsweise wird im Fall eines dreiphasigen Wechselspannungsnetzes ein hochpotentialseitiger Halbleiterschalter jeweils während Zeitintervallen eingeschaltet, in denen die mit dem Halbleiterschalter verbundene Wechselspannungsphase eine höhere Spannung aufweist beziehungsweise auf einem höheren elekrischen Potential liegt als die beiden anderen Wechselspannungsphasen.

Allerdings entsteht bei einem derartigen Betrieb des netzseitigen Stromrichters im Teillastbetrieb des Umrichters bei geringer generatorischer Last eine hohe Blindleistung in dem Stromrichter. Diese Blindleistung ist vor allem aufgrund der daraus resultierenden zusätzlichen ohmschen Verluste unerwünscht und mindert schließlich auch die Teillasteffizienz des Umrichters. Ursache hierfür ist letztlich der Freilaufpfad des Netzstroms über die antiparallelen Dioden des netzseitigen Stromrichters, durch die eine ungehinderte Oszillation entstehen kann. Zudem muss durch das harte Abschalten eines Halbleiterschalters der Strom innerhalb kurzer Zeit zunächst auf die zugehörige Freilaufdiode und dann auf den Halbleiterschalter einer anderen Wechselspannungsphase umkommutieren. Dies führt zu hohen Stromsteilheiten des Netzstroms, durch die wiederum Netzfilter und Resonanzen im Wechselspannungsnetz angeregt werden können. Aufgrund dessen können zudem die Dioden nicht als durchlassoptimierte Netzdioden ausgeführt werden, sondern müssen als für schnelle Schaltvorgänge geeignete Schaltdioden ausgelegt werden. Diese haben wiederum den Nachteil höherer Leitverluste und geringerer Stoßstromfähigkeit im Vergleich zu Netzdioden.

Der Erfindung liegt die Aufgabe zugrunde, im Betrieb eines Stromrichters der oben beschriebenen Art als Wechselrichter die im Stromrichter erzeugte Blindleistung und die Stromsteilheiten zu reduzieren.

Die Aufgabe wird erfindungsgemäß durch ein Verfahren mit den Merkmalen des Anspruchs 1, einen Stromrichter mit den Merkmalen des Anspruchs 12, ein Computerprogramm mit den Merkmalen des Anspruchs 13 und eine Verwendung eines Stromrichters mit den Merkmalen des Anspruchs 14 gelöst.

Vorteilhafte Ausgestaltungen der Erfindung sind Gegenstand der Unteransprüche.

Mit dem erfindungsgemäßen Verfahren wird ein Stromrichter als Wechselrichter zwischen einer Gleichspannung mit einem Hochpotential und einem Niederpotential und einem Wechselspannungsnetz betreiben, wobei der Stromrichter für jede Wechselspannungsphase des Wechselspannungsnetzes wenigstens eine mit der Wechselspannungsphase verbundene Halbbrücke mit einem hochpotentialseitigen Halbleiterschalter und einem niederpotentialseitigen Halbleiterschalter aufweist und jeder Halbleiterschalter antiparallel zu einer Diode geschaltet ist. Bei dem Verfahren
- wird für jeden Halbleiterschalter innerhalb einer Winkelperiode eines Phasenwinkels der Wechselspannung wenigstens ein Schalterwinkelbereich durch eine untere Bereichsgrenze und eine obere Bereichsgrenze vorgegeben,
- für jeden Schalterwinkelbereich werden ein Vorzündwinkel und ein Vorlöschwinkel bestimmt,
- für jeden Schalterwinkelbereich wird ein Aktivierungswinkelintervall bestimmt, dessen untere Intervallgrenze durch Subtraktion des Vorzündwinkels von der unteren Bereichsgrenze des Schalterwinkelbereichs gebildet wird und dessen obere Intervallgrenze durch Subtraktion des Vorlöschwinkels von der oberen Bereichsgrenze des Schalterwinkelbereichs gebildet wird, und
- jeder Halbleiterschalter wird während jedes für ihn bestimmten Aktivierungswinkelintervalls eingeschaltet.

Erfindungsgemäß werden also im Betrieb des Stromrichters als Wechselrichter die Aktivierungswinkelintervalle, in denen die einzelnen Halbleiterschalter des Stromrichters eingeschaltet werden, nicht starr vorgegeben, sondern es wird für jedes Aktivierungswinkelintervall ein Schalterwinkelbereich vorgegeben, der die Lage des Aktivierungswinkelintervalls grob festlegt, wobei die Intervallgrenzen des Aktivierungswinkelintervalls jedoch durch einen Vorzündwinkel und einen Vorlöschwinkel gegenüber den Bereichsgrenzen des Schalterwinkelbereichs verschoben werden. Dadurch können die Intervallgrenzen der Aktivierungswinkelintervalle vorteilhaft derart festgelegt werden, dass in dem Betrieb des Stromrichters als Wechselrichter eine Blindleistung und Stromsteilheiten reduziert werden können. Ferner können die Intervallgrenzen der Aktivierungswinkelintervalle der von dem Stromrichter in das Wechselspannungsnetz zu übertragenden Leistung angepasst werden. Beispielsweise können die Aktivierungswinkelintervalle mit steigender zu übertragender Leistung vergrößert werden.

Bei einer Ausgestaltung der Erfindung werden der Vorzündwinkel und der Vorlöschwinkel eines Schalterwinkelbereichs eines Halbleiterschalters jeweils als Summe eines Vorsteuerwertes und eines Korrekturwertes bestimmt. Die Vorsteuerwerte werden in Abhängigkeit von einer von dem Stromrichter in das Wechselspannungsnetz zu übertragenden elektrischen Leistung bestimmt und durch die Korrekturwerte wird ein Strom nachgeregelt, der in dem Brückenarm derjenigen Halbbrücke fließt, in dem der Halbleiterschalter angeordnet ist.

Die vorgenannte Ausgestaltung der Erfindung ermöglicht zum einen, die Intervallgrenzen der Aktivierungswinkelintervalle der Halbleiterschalter durch die Vorsteuerwerte der Vorzündwinkel und Vorlöschwinkel an die von dem Stromrichter in das Wechselspannungsnetz zu übertragende elektrische Leistung anzupassen. Zum andern ermöglicht diese Ausgestaltung der Erfindung, die Intervallgrenzen außerdem dynamisch in Abhängigkeit von den in den Brückenarmen der Halbbrücken jeweils fließenden Strömen einzustellen, um eine Blindleistung und Stromsteilheiten dieser Ströme im Betrieb des Stromrichters als Wechselrichter zu minimieren.

Bei einer weiteren Ausgestaltung der Erfindung werden der Vorzündwinkel und der Vorlöschwinkel eines Schalterwinkelbereichs eines Halbleiterschalters derart bestimmt, dass das Aktivierungswinkelintervall zu einem Diodenleitwinkelintervall korrespondiert, in dem die antiparallel zu dem Halbleiterschalter geschaltete Diode in einem Betrieb des Stromrichters als Gleichrichter mit zu dem Betrieb des Stromrichters als Wechselrichter vergleichbaren Lastbedingungen stromdurchflossen ist. Die Intervallgrenzen des Aktivierungswinkelintervalls gehen dabei vorzugsweise im Wesentlichen durch eine Spiegelung der Intervallgrenzen des korrespondierenden Diodenleitwinkelintervalls an dem Mittelpunkt des Schalterwinkelbereichs hervor.

Die vorgenannte Ausgestaltung der Erfindung passt ein Aktivierungswinkelintervall eines Halbleiterschalters also einem Diodenleitwinkelintervall an, in dem die antiparallel zu dem Halbleiterschalter geschaltete Diode unter vergleichbaren Lastbedingungen in einem Betrieb des Stromrichters als Gleichrichter stromdurchflossen ist. Dadurch wird vorteilhaft ein Stromverlauf des Stroms durch den Halbleiterschalter realisiert, der dem natürlichen Stromverlauf des Stroms durch die Diode im Gleichrichterbetrieb des Stromrichters entspricht. Dadurch können die Stromsteilheiten im Wechselrichterbetrieb des Stromrichters den Stromsteilheiten im Gleichrichterbetrieb angepasst und im Wesentlichen auf diese Stromsteilheiten reduziert werden.

Bei einer weiteren Ausgestaltung der Erfindung wird der Mittelpunkt eines Aktivierungswinkelintervalls gegenüber dem Mittelpunkt des zugehörigen Schalterwinkelbereichs zur unteren Bereichsgrenze des Schalterwinkelbereichs hin verschoben.

Auch die vorgenannte Ausgestaltung der Erfindung passt den Wechselrichterbetrieb des Stromrichters dem Gleichrichterbetrieb an, um die Stromsteilheiten im Wechselrichterbetrieb zu reduzieren. Die Verschiebung des Mittelpunkts des Aktivierungswinkelintervalls gegenüber dem Mittelpunkt des zugehörigen Schalterwinkelbereichs zur unteren Bereichsgrenze des Schalterwinkelbereichs hin korrespondiert dabei zu einer entgegengesetzten Verschiebung des Mittelpunkts des Diodenleitwinkelintervalls, in dem die antiparallel zu dem Halbleiterschalter geschaltete Diode im Gleichrichterbetrieb des Stromrichters stromdurchflossen ist.

Im Fall, dass das Wechselspannungsnetz mehrphasig ist, sieht eine weitere Ausgestaltung der Erfindung vor, dass für jeden Halbleiterschalter innerhalb einer Winkelperiode eines Phasenwinkels der Wechselspannung wenigstens zwei Schalterwinkelbereiche durch jeweils eine untere Bereichsgrenze und eine obere Bereichsgrenze vorgegeben werden. Dadurch können insbesondere die Einschaltdauern der Halbleiterschalter während einer Periode der Wechselspannung verringert und unterbrochen werden, um Stromschwingungen durch die antiparallel zu den Halbleiterschaltern geschalteten Dioden zu reduzieren. Derartige Stromschwingungen können sich bei längeren ununterbrochenen Einschaltdauern der einzelnen Halbleiterschalter insbesondere bei kleinen von dem Stromrichter in das Wechselspannungsnetz zu übertragenden Leistungen ausbilden und eine hohe Blindleistung verursachen. Es ist daher von Vorteil, diese Stromschwingungen zu reduzieren.

Im Fall, dass das Wechselspannungsnetz mehrphasig ist, sieht eine weitere Ausgestaltung der Erfindung vor, dass die Schalterwinkelbereiche in Abhängigkeit von verketteten Spannungen der Wechselspannungsphasen vorgegeben werden. Beispielsweise wird jeder Schalterwinkelbereich eines hochpotentialseitigen Halbleiterschalters als ein Phasenwinkelbereich vorgegeben, in dem die verkettete Spannung zwischen der mit dem Halbleiterschalter verbundenen Wechselspannungsphase und einer weiteren Wechselspannungsphase eine größte aller verketteten Spannungen ist. Entsprechend wird beispielsweise jeder Schalterwinkelbereich eines niederpotentialseitigen Halbleiterschalters als ein Phasenwinkelbereich vorgegeben, in dem die verkettete Spannung zwischen der mit dem Halbleiterschalter verbundenen Wechselspannungsphase und einer weiteren Wechselspannungsphase eine kleinste aller verketteten Spannungen ist. Unter der verketteten Spannung zwischen der mit dem Halbleiterschalter verbundenen Wechselspannungsphase und einer weiteren Wechselspannungsphase wird die Spannung verstanden, die sich durch Subtraktion der Spannung der weiteren Wechselspannungsphase von der Spannung der mit dem Halbleiterschalter verbundenen Wechselspannungsphase ergibt.

Die vorgenannte Ausgestaltung der Erfindung passt die Einschaltzeiten und -dauern der Halbleiterschalter vorteilhaft dem Verlauf beziehungsweise der Phasenlage der verketteten Spannungen des Wechselspannungsnetzes an und ermöglicht so insbesondere eine optimierte Einspeisung von Energie in das Wechselspannungsnetz durch den Stromrichter.

Im Fall, dass das Wechselspannungsnetz einphasig ist, sieht eine weitere Ausgestaltung der Erfindung vor, dass für jeden hochpotentialseitigen Halbleiterschalter innerhalb einer Winkelperiode eines Phasenwinkels der mit dem Halbleiterschalter verbundenen Wechselspannung ein Schalterwinkelbereich vorgegeben wird, so dass die Wechselspannung in dem Schalterwinkelbereich ein Maximum aufweist. Entsprechend sieht eine weitere Ausgestaltung der Erfindung im Fall, dass das Wechselspannungsnetz einphasig ist, vor, dass für jeden niederpotentialseitigen Halbleiterschalter innerhalb einer Winkelperiode eines Phasenwinkels der mit dem Halbleiterschalter verbundenen Wechselspannung ein Schalterwinkelbereich vorgegeben wird, so dass die Wechselspannung in dem Schalterwinkelbereich ein Minimum aufweist.

Die vorgenannten Ausgestaltungen der Erfindung für ein einphasiges Wechselspannungsnetz entsprechen den vorher genannten Ausgestaltungen der Erfindung für ein mehrphasiges Wechselspannungsnetz, wobei die mit einem Halbleiterschalter verbundene Wechselspannung des einphasigen Wechselspannungsnetzes die Rolle einer verketteten Spannung des mehrphasigen Wechselspannungsnetzes übernimmt.

Ein erfindungsgemäßer Stromrichter zwischen einer Gleichspannung mit einem Hochpotential und einem Niederpotential und einem Wechselspannungsnetz umfasst
- für jede Wechselspannungsphase des Wechselspannungsnetzes wenigstens eine mit der Wechselspannungsphase verbundene Halbbrücke mit einem hochpotentialseitigen Halbleiterschalter und einem niederpotentialseitigen Halbleiterschalter,
- für jeden Halbleiterschalter eine antiparallel zu dem Halbleiterschalter geschaltete Diode, und
- eine Steuereinheit, die eingerichtet ist, in einem Betrieb des Stromrichters als Wechselrichter gemäß dem erfindungsgemäßen Verfahren für jeden Halbleiterschalter innerhalb einer Winkelperiode eines Phasenwinkels der Wechselspannung den wenigstens einen Schalterwinkelbereich vorzugeben, für jeden Schalterwinkelbereich das Aktivierungswinkelintervall zu bestimmen und jeden Halbleiterschalter während jedes für ihn bestimmten Aktivierungswinkelintervalls einzuschalten.

Da ein erfindungsgemäßer Stromrichter zur Durchführung des erfindungsgemäßen Verfahrens eingerichtet ist, entsprechen die Vorteile eines derartigen Stromrichters den oben genannten Vorteilen des erfindungsgemäßen Verfahrens.

Ein erfindungsgemäßes Computerprogramm umfasst Befehle, die bei der Ausführung des Computerprogramms durch eine Steuereinheit diese veranlassen, das erfindungsgemäße Verfahren auszuführen.

Die Erfindung sieht ferner eine Verwendung eines erfindungsgemäßen Stromrichters als Teil eines Umrichters vor, der zur Energieversorgung eines Elektromotors aus dem Wechselspannungsnetz eingerichtet ist, wobei der Stromrichter zum Rückspeisen von Energie des Elektromotors in das Wechselspannungsnetz gemäß dem erfindungsgemäßen Verfahren betrieben wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 einen Schaltplan eines zwischen einem dreiphasigen Wechselspannungsnetz und einem Elektromotor betriebenen Umrichters mit einem ersten Ausführungsbeispiel eines Stromrichters,
FIG 2 verkettete Spannungen des Wechselspannungsnetzes, Netzströme, einen Schalterstrom und Ansteuersignale im Betrieb des in Figur 1 gezeigten Stromrichters als Wechselrichter,
FIG 3 eine Wechselspannung und zwei verkettete Spannungen des Wechselspannungsnetzes, einen Netzstrom, einen Schalterstrom und ein Ansteuersignal im Betrieb des in Figur 1 gezeigten Stromrichters als Gleichrichter,
FIG 4 eine Wechselspannung und zwei verkettete Spannungen des Wechselspannungsnetzes, einen Netzstrom und einen Diodenstrom im Betrieb des in Figur 1 gezeigten Stromrichters als Gleichrichter,
FIG 5 einen Schaltplan eines zwischen einem einphasigen Wechselspannungsnetz und einem Elektromotor betriebenen Umrichters mit einem zweiten Ausführungsbeispiel eines Stromrichters,
FIG 6 eine Wechselspannung des Wechselspannungsnetzes, einen Netzstrom, einen Schalterstrom und Ansteuersignale im Betrieb des in Figur 5 gezeigten Stromrichters als Wechselrichter,
FIG 7 einen Schaltplan eines zwischen einem einphasigen Wechselspannungsnetz und einem Elektromotor betriebenen Umrichters mit einem dritten Ausführungsbeispiel eines Stromrichters,
FIG 8 Wechselspannungen des Wechselspannungsnetzes, einen Netzstrom, einen Schalterstrom und Ansteuersignale im Betrieb des in Figur 7 gezeigten Stromrichters als Wechselrichter.

Einander entsprechende Teile sind in den Figuren mit denselben Bezugszeichen versehen.

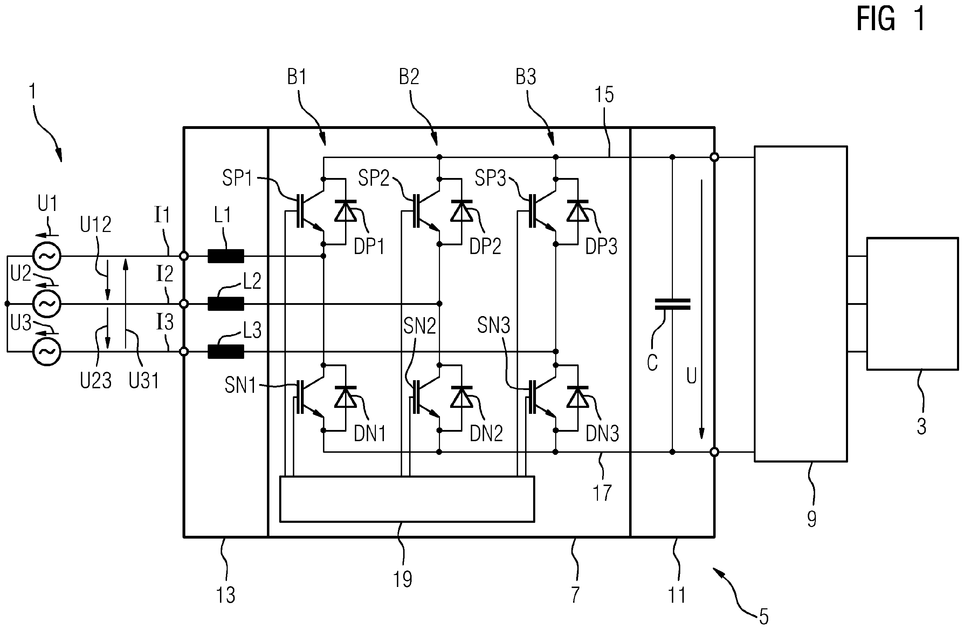

Figur 1 (FIG 1) zeigt einen Schaltplan eines zwischen einem dreiphasigen Wechselspannungsnetz 1 und einem Elektromotor 3 betriebenen Umrichters 5. Der Umrichter 5 umfasst einen netzseitigen Stromrichter 7, einen motorseitigen Stromrichter 9, einen zwischen die Stromrichter 7, 9 geschalteten elektrischen Zwischenkreis 11 und eine zwischen das Wechselspannungsnetz 1 und den Stromrichter 7 geschaltete Netzdrosseleinheit 13.

Der Zwischenkreis 11 ist ein Gleichspannungszwischenkreis mit einer Gleichspannung U (Zwischenkreisspannung) zwischen einer Hochpotentialschiene 15, die auf einem Hochpotential liegt, und einer Niederpotentialschiene 17, die auf einem Niederpotential liegt. Der Zwischenkreis 11 weist einen Zwischenkreiskondensator C auf.

Der Stromrichter 7 ist ein erstes Ausführungsbeispiel eines erfindungsgemäßen Stromrichters. Er umfasst für jede Wechselspannungsphase des Wechselspannungsnetzes 1 eine mit der Wechselspannungsphase verbundene Halbbrücke B1, B2, B3 mit einem hochpotentialseitigen Halbleiterschalter SP1, SP2, SP3 und einem niederpotentialseitigen Halbleiterschalter SN1, SN2, SN3. Jeder hochpotentialseitige Halbleiterschalter SP1, SP2, SP3 ist antiparallel zu einer hochpotentialseitigen Diode DP1, DP2, DP3 geschaltet und jeder niederpotentialseitige Halbleiterschalter SN1, SN2, SN3 ist antiparallel zu einer niederpotentialseitigen Diode DN1, DN2, DN3 geschaltet. Die Halbleiterschalter SP1, SP2, SP3, SN1, SN2, SN3 sind beispielsweise jeweils ein Bipolartransistor mit isolierter Gate-Elektrode (englisch: Insulated-Gate Bipolar Transistor, kurz: IGBT). Alternativ sind die Halbleiterschalter SP1, SP2, SP3, SN1, SN2, SN3 beispielsweise jeweils ein Metall-Oxid-Halbleiter-Feldeffekttransistor (englisch: Metal-Oxide-Semiconductor Field-Effect Transistor, kurz: MOSFET); in diesem Fall kann die zu einem Halbleiterschalter SP1, SP2, SP3, SN1, SN2, SN3 antiparallel geschaltete Diode DP1, DP2, DP3, DN1, DN2, DN3 auch eine intrinsische Diode des MOSFET sein, die auch als Inversdiode oder Bodydiode bezeichnet wird.

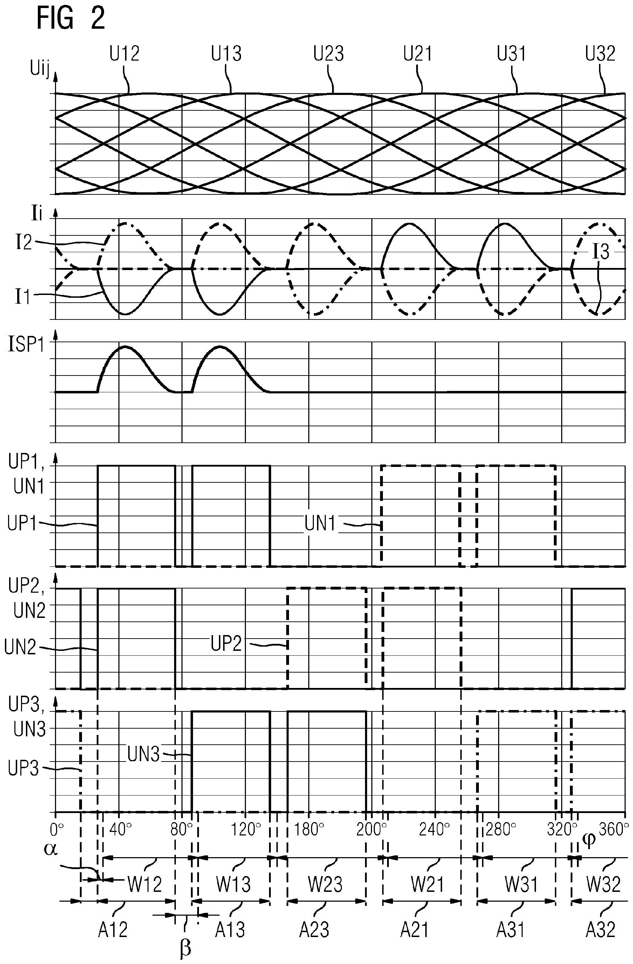

Ferner weist der Stromrichter 7 eine Steuereinheit 19 auf, die eingerichtet ist, die Halbleiterschalter SP1, SP2, SP3, SN1, SN2, SN3 in einem Betrieb des Stromrichters 7 als Wechselrichter erfindungsgemäß wie unten anhand von Figur 2 näher beschrieben anzusteuern.

Der Stromrichter 9 ist beispielsweise in aus dem Stand der Technik bekannter Weise mit einer Halbbrücke mit Halbleiterschaltern für jede Wechselspannungsphase des Motors 3 ausgeführt und hier nicht näher dargestellt, da seine konkrete Ausführung für die Erfindung nicht relevant ist.

Die Netzdrosseleinheit 13 weist für jede Wechselspannungsphase des Wechselspannungsnetzes 1 eine Induktivität L1, L2, L3 auf.

Eine Wechselspannung einer ersten Wechselspannungsphase des Wechselspannungsnetzes 1 ist mit U1 bezeichnet, ein Netzstrom der ersten Wechselspannungsphase mit I1. Entsprechend bezeichnen U2 eine Wechselspannung und I2 einen Netzstrom einer zweiten Wechselspannungsphase und U3 eine Wechselspannung und I3 einen Netzstrom der dritten Wechselspannungsphase. U12 = U1 - U2, U23 = U2 - U3 und U31 = U3 - U1 bezeichnen verkettete Spannungen zwischen den Wechselspannungsphasen.

Figur 2 (FIG 2) illustriert das Betreiben des in Figur 1 gezeigten Stromrichters 7 als Wechselrichter gemäß dem erfindungsgemäßen Verfahren zum Rückspeisen von dem Elektromotor 3 im generatorischen Betrieb erzeugter elektrischer Energie in das Wechselspannungsnetz 1.

Dazu zeigt Figur 2 Ansteuersignale UP1, UP2, UP3, UN1, UN2, UN3, mit denen die Halbleiterschalter SP1, SP2, SP3, SN1, SN2, SN3 über deren Gate-Anschlüsse während einer Winkelperiode eines Phasenwinkels ϕ der Wechselspannung des Wechselspannungsnetzes 1 durch die Steuereinheit 19 jeweils angesteuert werden. Beispielsweise bezeichnet UP1 ein Ansteuersignal, mit dem der Halbleiterschalter SP1 angesteuert wird, und UN1 bezeichnet ein Ansteuersignal, mit dem der Halbleiterschalter SN1 angesteuert wird. Entsprechend bezeichnen UP2 ein Ansteuersignal für den Halbleiterschalter SP2, UN2 ein Ansteuersignal für den Halbleiterschalter SN2, UP3 ein Ansteuersignal für den Halbleiterschalter SP3 und UN3 ein Ansteuersignal für den Halbleiterschalter SN3.

Ferner zeigt Figur 2 auch die verketteten Spannungen U12, U23, U31, U21 = -U12, U32 = -U23 und U13 = -U31 des Wechselspannungsnetzes 1 sowie beispielhaft einen Schalterstrom ISP1, der durch den Halbleiterschalter SP1 fließt, in der Winkelperiode des Wechselspannungsnetzes 1. Im Fall, dass der Halbleiterschalter SP1 ein IGBT ist, ist ISP1 beispielsweise ein Strom zwischen dem Kollektor-Anschluss und dem Emitter-Anschluss des IGBT. Im Fall, dass der Halbleiterschalter SP1 ein MOSFET ist, ist ISP1 ein Strom zwischen dem Drain-Anschluss und dem Source-Anschluss des MOSFET. Die Ansteuersignale UP1, UP2, UP3, UN1, UN2, UN3, die verketteten Spannungen U12, U23, U31, U21, U32, U13 und der Schalterstrom ISP1 sind jeweils in Abhängigkeit von dem Phasenwinkel ϕ während einer Winkelperiode dargestellt.

Für jeden Halbleiterschalter SP1, SP2, SP3, SN1, SN2, SN3 werden innerhalb einer Winkelperiode zwei Schalterwinkelbereiche W12, W23, W31, W21, W32, W13 durch jeweils eine untere Bereichsgrenze und eine obere Bereichsgrenze vorgegeben. Jeder Schalterwinkelbereich W12, W23, W31, W21, W32, W13 eines hochpotentialseitigen Halbleiterschalters SP1, SP2, SP3 wird als ein Phasenwinkelbereich vorgegeben, in dem die verkettete Spannung U12, U23, U31, U21, U32, U13 zwischen der mit dem Halbleiterschalter SP1, SP2, SP3 verbundenen Wechselspannungsphase und einer weiteren Wechselspannungsphase eine größte aller verketteten Spannungen U12, U23, U31, U21, U32, U13 ist. Beispielsweise werden für den Halbleiterschalter SP1 ein Schalterwinkelbereich W12 = [30°,90°], in dem die verkettete Spannung U12 am größten ist, und ein Schalterwinkelbereich W13 = [90°,150°], in dem die verkettete Spannung U13 am größten ist, vorgegeben. Für den Halbleiterschalter SP2 werden ein Schalterwinkelbereich W23 = [150°,210°], in dem die verkettete Spannung U23 am größten ist, und ein Schalterwinkelbereich W21 = [210°,270°], in dem die verkettete Spannung U21 am größten ist, vorgegeben. Für den Halbleiterschalter SP3 werden ein Schalterwinkelbereich W31 = [270°,330°], in dem die verkettete Spannung U31 am größten ist, und ein Schalterwinkelbereich W32 = [330°,360°]∪[0°,30°], in dem die verkettete Spannung U32 am größten ist, vorgegeben.

Jeder Schalterwinkelbereich W12, W23, W31, W21, W32, W13 eines niederpotentialseitigen Halbleiterschalters SN1, SN2, SN3 wird als ein Phasenwinkelbereich vorgegeben, in dem die verkettete Spannung U12, U23, U31, U21, U32, U13 zwischen der mit dem Halbleiterschalter SP1, SP2, SP3 verbundenen Wechselspannungsphase und einer weiteren Wechselspannungsphase eine kleinste aller verketteten Spannungen U12, U23, U31, U21, U32, U13 ist. Beispielsweise werden für den Halbleiterschalter SN1 der Schalterwinkelbereich W21, in dem die verkettete Spannung U12 am kleinsten ist, und der Schalterwinkelbereich W31, in dem die verkettete Spannung U13 am kleinsten ist, vorgegeben. Für den Halbleiterschalter SN2 werden der Schalterwinkelbereich W12, in dem die verkettete Spannung U21 am kleinsten ist, und der Schalterwinkelbereich W32, in dem die verkettete Spannung U23 am kleinsten ist, vorgegeben. Für den Halbleiterschalter SN3 werden der Schalterwinkelbereich W13, in dem die verkettete Spannung U31 am kleinsten ist, und der Schalterwinkelbereich W23, in dem die verkettete Spannung U32 am kleinsten ist, vorgegeben.

Jeder Schalterwinkelbereich W12, W23, W31, W21, W32, W13 wird also insbesondere symmetrisch um die Extremstelle des Phasenwinkels ϕ herum vorgegeben, an der die jeweilige verkettete Spannung U12, U23, U31, U21, U32, U13 einen Extremwert aufweist, das heißt die Extremstelle bildet den Mittelpunkt des Schalterwinkelbereichs W12, W23, W31, W21, W32, W13. Beispielsweise nimmt die verkettete Spannung U12 in einer Winkelperiode bei der Extremstelle 60° ihr Maximum an, die der Mittelpunkt des Schalterwinkelbereichs W12 ist.

Für jeden Schalterwinkelbereich W12, W23, W31, W21, W32, W13 werden ein Vorzündwinkel α und ein Vorlöschwinkel β in unten näher beschriebener Weise bestimmt. Ferner wird für jeden Schalterwinkelbereich W12, W23, W31, W21, W32, W13 ein Aktivierungswinkelintervall A12, A23, A31, A21, A32, A13 bestimmt, dessen untere Intervallgrenze durch Subtraktion des Vorzündwinkels α von der unteren Bereichsgrenze des Schalterwinkelbereichs W12, W23, W31, W21, W32, W13 gebildet wird und dessen obere Intervallgrenze durch Subtraktion des Vorlöschwinkels β von der oberen Bereichsgrenze des Schalterwinkelbereichs W12, W23, W31, W21, W32, W13 gebildet wird. Beispielsweise wird das Aktivierungswinkelintervall A12 für den Schalterwinkelbereich W12 also gemäß A12 = [30°-α,90°-β] mit dem Vorzündwinkel α und dem Vorlöschwinkel β, die für den Schalterwinkelbereich W12 bestimmt wurden, gebildet. Entsprechend werden die Aktivierungswinkelintervalle A23, A31, A21, A32, A13 für die anderen Schalterwinkelbereiche W23, W31, W21, W32, W13 gebildet.

Die Halbleiterschalter SP1, SP2, SP3, SN1, SN2, SN3 werden dann jeweils in den für sie bestimmten Aktivierungswinkelintervallen A12, A23, A31, A21, A32, A13 eingeschaltet, indem das Ansteuersignal UP1, UP2, UP3, UN1, UN2, UN3 für den jeweiligen Halbleiterschalter SP1, SP2, SP3, SN1, SN2, SN3 während der beiden für diesen Halbleiterschalter SP1, SP2, SP3, SN1, SN2, SN3 bestimmten Aktivierungswinkelintervalle A12, A23, A31, A21, A32, A13 auf ein Aktivierungsniveau angehoben wird. Beispielsweise wird also der Halbleiterschalter SP1 in den Aktivierungswinkelintervallen A12 und A13 eingeschaltet, wodurch der Schalterstrom ISP1 durch den Halbleiterschalter SP1 in den beiden Aktivierungswinkelintervallen A12, A13 jeweils zunächst ansteigt und danach wieder abnimmt.

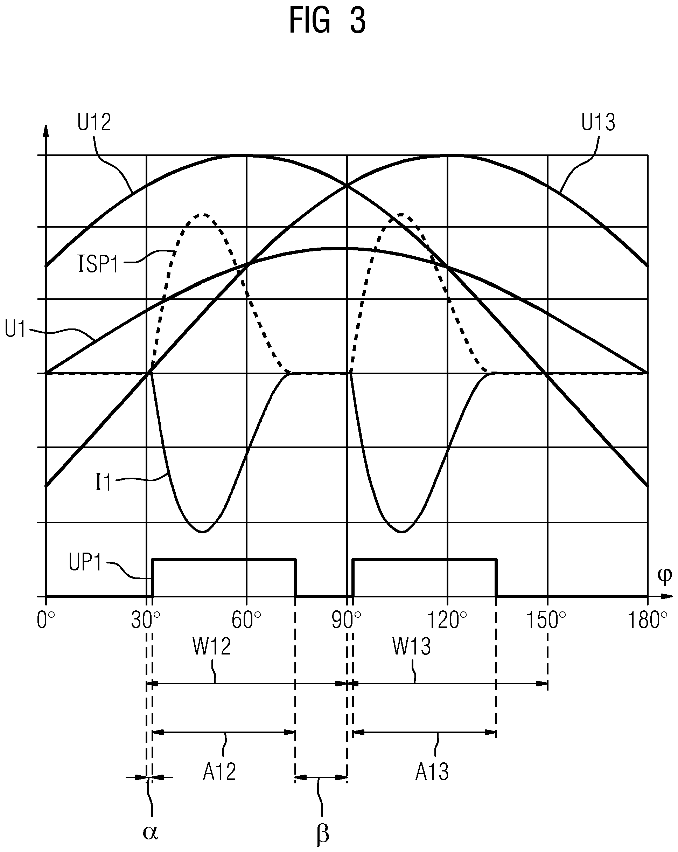

In dem in Figur 2 dargestellten Beispiel weisen alle Schalterwinkelbereiche W12, W23, W31, W21, W32, W13 denselben Vorzündwinkel α und denselben Vorlöschwinkel β auf. Im Allgemeinen können sich die Vorzündwinkel α und/oder die Vorlöschwinkel β verschiedener Schalterwinkelbereiche W12, W23, W31, W21, W32, W13 jedoch voneinander unterscheiden, da sich Lastbedingungen während einer Winkelperiode ändern können. Ferner sind der Vorzündwinkel α und der Vorlöschwinkel β in dem in Figur 2 gezeigten Beispiel jeweils positiv. Jedoch können der Vorzündwinkel α und/oder der Vorlöschwinkel β eines Schalterwinkelbereichs W12, W23, W31, W21, W32, W13 im Allgemeinen auch negativ sein (siehe dazu Figur 3). Des Weiteren sind die beiden Aktivierungswinkelintervalle A12, A23, A31, A21, A32, A13 jedes Halbleiterschalters SP1, SP2, SP3, SN1, SN2, SN3 in dem in Figur 2 gezeigten Beispiel disjunkt. Im Allgemeinen können sich die beiden Aktivierungswinkelintervalle A12, A23, A31, A21, A32, A13 eines Halbleiterschalters SP1, SP2, SP3, SN1, SN2, SN3 jedoch auch überlappen, so dass der Halbleiterschalter SP1, SP2, SP3, SN1, SN2, SN3 in einem durch die Vereinigung der beiden Aktivierungswinkelintervalle A12, A23, A31, A21, A32, A13 definierten Phasenwinkelbereich eingeschaltet wird. Insbesondere wächst die Länge der einzelnen Aktivierungswinkelintervalle A12, A23, A31, A21, A32, A13 in der Regel mit einer elektrischen Leistung, die der Stromrichter 7 in das Wechselspannungsnetz 1 abgibt, so dass die beiden Aktivierungswinkelintervalle A12, A23, A31, A21, A32, A13 eines Halbleiterschalters SP1, SP2, SP3, SN1, SN2, SN3 bei kleinen Leistungen disjunkt sind und bei höheren Leistungen überlappen.

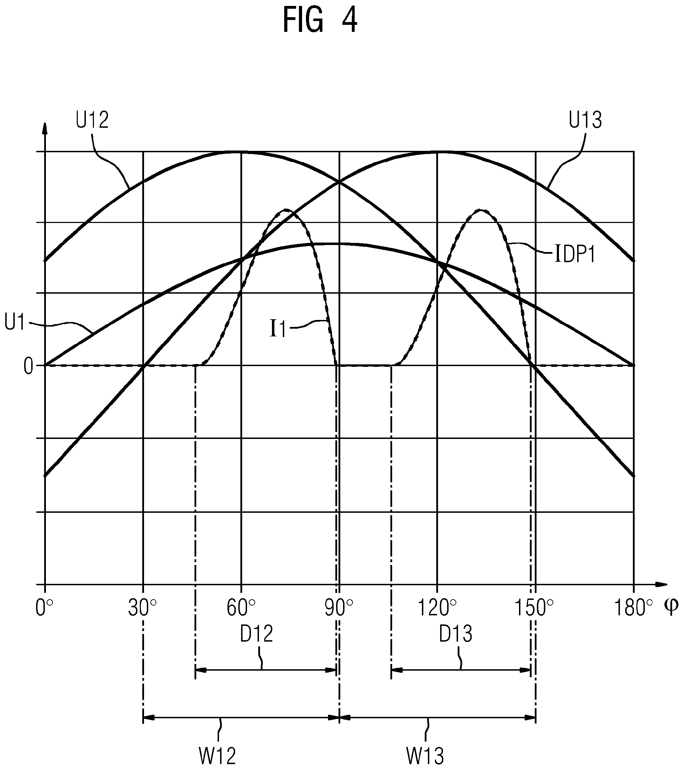

Der Vorzündwinkel α und der Vorlöschwinkel β des Schalterwinkelbereichs W12, W23, W31, W21, W32, W13 eines Halbleiterschalters SP1, SP2, SP3, SN1, SN2, SN3 werden derart bestimmt, dass das Aktivierungswinkelintervall A12, A23, A31, A21, A32, A13 zu einem Diodenleitwinkelintervall korrespondiert, in dem die antiparallel zu dem Halbleiterschalter SP1, SP2, SP3, SN1, SN2, SN3 geschaltete Diode DP1, DP2, DP3, DN1, DN2, DN3 in einem Betrieb des Stromrichters 7 als Gleichrichter mit zu dem Betrieb des Stromrichters 7 als Wechselrichter vergleichbaren Lastbedingungen stromdurchflossen ist. Dabei gehen die Intervallgrenzen des Aktivierungswinkelintervalls A12, A23, A31, A21, A32, A13 im Wesentlichen durch eine Spiegelung der Intervallgrenzen des korrespondierenden Diodenleitwinkelintervalls an dem Mittelpunkt des Schalterwinkelbereichs W12, W23, W31, W21, W32, W13 hervor. Dies wird im Folgenden anhand der Figuren 3 und 4 näher erläutert.

Figur 3 (FIG 3) zeigt analog zu Figur 2 die Spannung U1 der ersten Wechselspannungsphase, die verketteten Spannungen U12, U13, den Netzstrom I1 und den Schalterstrom ISP1, der durch Halbleiterschalter SP1 fließt, in Abhängigkeit von dem Phasenwinkel ϕ während einer halben Winkelperiode des Phasenwinkels ϕ in einem Betrieb des in Figur 1 gezeigten Stromrichters 7 als Wechselrichter, wobei im Unterschied zu Figur 2 der Vorzündwinkel α negativ ist.

Figur 4 (FIG 4) zeigt analog zu Figur 3 die Spannung U1 der ersten Wechselspannungsphase, die verketteten Spannungen U12, U13, den Netzstrom I1 und einen Diodenstrom IDP1, der durch die Diode DP1 fließt, in Abhängigkeit von dem Phasenwinkel ϕ während einer halben Winkelperiode des Phasenwinkels ϕ in einem Betrieb des in Figur 1 gezeigten Stromrichters 7 als Gleichrichter im Betrieb des Umrichters 5 zur Versorgung des Elektromotors 3 mit elektrischer Energie aus dem Wechselspannungsnetz 1 mit zu dem Betrieb des Stromrichters 7 als Wechselrichter gemäß Figur 3 vergleichbaren Lastbedingungen. Der Diodenstrom IDP1 stimmt in diesem Fall mit dem Netzstrom I1 überein.

In diesem Betrieb des Stromrichters 7 sind alle Halbleiterschalter SP1, SP2, SP3, SN1, SN2, SN3 abgeschaltet und die Diode DP1 führt während eines Diodenleitwinkelintervalls D12 und eines Diodenleitwinkelintervalls D13 elektrischen Strom. Erfindungsgemäß werden die Aktivierungswinkelintervalle A12 und A13 für den Halbleiterschalter SP1 (siehe Figur 3) im Wesentlichen durch eine Spiegelung der Intervallgrenzen des korrespondierenden Diodenleitwinkelintervalls D12, D13 an dem Mittelpunkt des jeweiligen Schalterwinkelbereichs W12, W13 gebildet.

Beispielsweise wird das Aktivierungswinkelintervall A12 im Wesentlichen durch eine Spiegelung des Diodenleitwinkelintervalls D12 an dem Mittelpunkt 60° des Schalterwinkelbereichs W12 gebildet. Der Mittelpunkt des Aktivierungswinkelintervalls A12 wird dadurch gegenüber dem Mittelpunkt des zugehörigen Schalterwinkelbereichs W12 zur unteren Bereichsgrenze 30° des Schalterwinkelbereichs W12 hin verschoben, da der Mittelpunkt des Diodenleitwinkelintervalls D12 gegenüber dem Mittelpunkt des Schalterwinkelbereichs W12 zur oberen Bereichsgrenze 90° des Schalterwinkelbereichs W12 hin verschoben ist.

Der Vorzündwinkel α und der Vorlöschwinkel β eines Schalterwinkelbereichs W12, W23, W31, W21, W32, W13 für einen Halbleiterschalter SP1, SP2, SP3, SN1, SN2, SN3 werden jeweils als Summe α = α₀ + α_{c}, β = β₀ + β_{c} eines Vorsteuerwertes α₀, β₀ und eines Korrekturwertes α_{c}, β_{c} bestimmt. Die Vorsteuerwerte α₀, β₀ werden in Abhängigkeit von einer von dem Stromrichter 7 in das Wechselspannungsnetz 1 abzugebeneden elektrischen Leistung bestimmt. Durch die Korrekturwerte α_{c}, β_{c} wird ein Strom nachgeregelt, der in dem Brückenarm derjenigen Halbbrücke B1, B2, B3 fließt, in dem der Halbleiterschalter SP1, SP2, SP3, SN1, SN2, SN3 angeordnet ist. Dieser Strom wird durch die Korrekturwerte α_{c}, β_{c} derart geregelt, dass ein Stromfluss durch die zu dem Halbleiterschalter SP1, SP2, SP3, SN1, SN2, SN3 antiparallele Diode DP1, DP2, DP3, DN1, DN2, DN3 und damit eine Blindleistung sowie ein Stromfluss durch den Halbleiterschalter SP1, SP2, SP3, SN1, SN2, SN3 am Ende des Aktivierungswinkelintervalls A12, A23, A31, A21, A32, A13 reduziert (idealerweise vollständig eliminiert) werden.

Das oben für ein dreiphasiges Wechselspannungsnetz 1 beschriebene Verfahren wird in naheliegender Weise für ein mehrphasiges Wechselspannungsnetz 1 mit einer anderen Anzahl von Wechselspannungsphasen abgewandelt, indem es an die jeweilige Anzahl verketteter Spannungen angepasst wird. Für ein n-phasiges Wechselspannungsnetz 1 mit n > 1 werden dann für jeden Halbleiterschalter eines Stromrichters 7 mit n Halbbrücken n-1 Schalterwinkelbereiche vorgegeben und n-1 Aktivierungswinkelintervalle bestimmt.

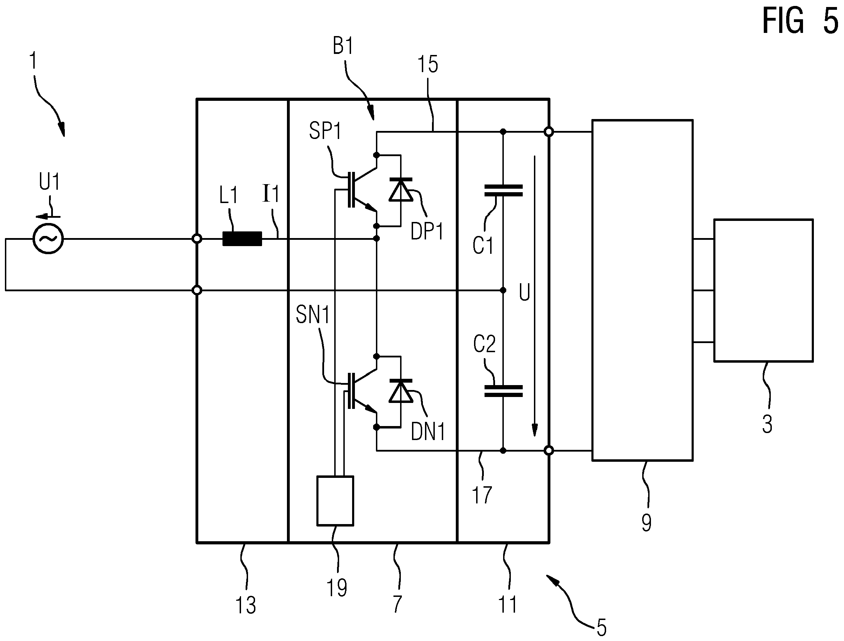

Auch für ein einphasiges Wechselspannungsnetz 1 kann das Verfahren entsprechend eingesetzt werden. Zwei Beispiele mit einem einphasigen Wechselspannungsnetz 1 werden im Folgenden anhand der Figuren 5 bis 8 beschrieben.

Figur 5 (FIG 5) zeigt ein erstes Beispiel eines zwischen einem einphasigen Wechselspannungsnetz 1 und einem Elektromotor 3 betriebenen Umrichters 5, wobei der Umrichter 5 analog zu Figur 1 ausgeführt ist. Der netzseitige Stromrichter 7 des Umrichters 5 weist eine Halbbrücke B1 auf, die über eine Induktivität L1 der Netzdrosseleinheit 13 mit der Wechselspannung U1 des Wechselspannungsnetzes 1 verbunden ist und einen hochpotentialseitigen Halbleiterschalter SP1, einen niederpotentialseitigen Halbleiterschalter SN1 sowie dazu jeweils eine antiparallel geschaltete Diode DP1, DN1 aufweist. Der Zwischenkreis 11 weist zwei Zwischenkreiskondensatoren C1, C2 auf, die über eine elektrische Leitung verbunden sind, die mit der Wechselspannung U1 verbunden ist.

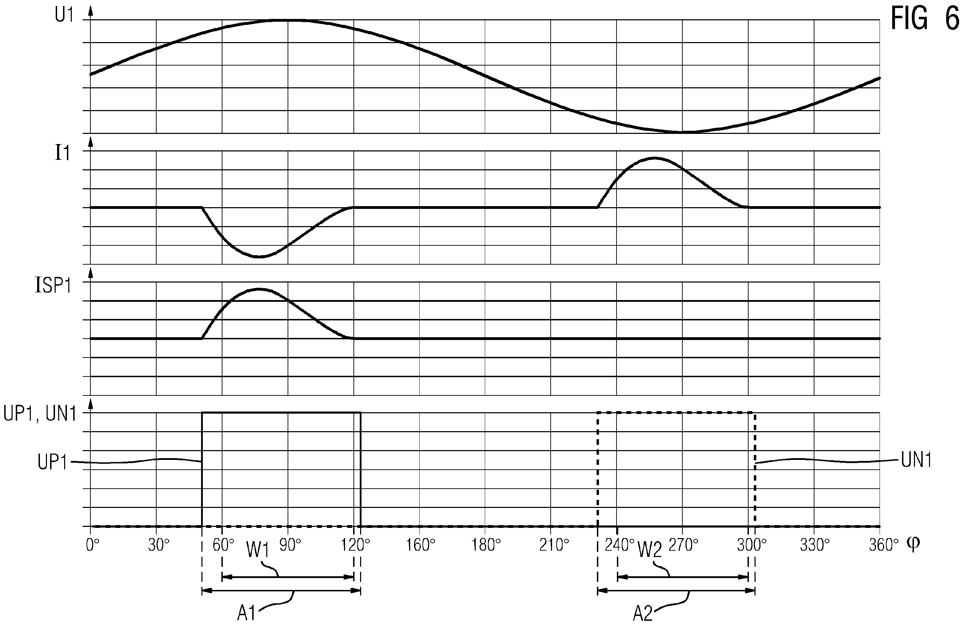

Figur 6 (FIG 6) illustriert das Betreiben des in Figur 5 gezeigten Stromrichters 7 als Wechselrichter gemäß dem erfindungsgemäßen Verfahren zum Rückspeisen von dem Elektromotor 3 im generatorischen Betrieb erzeugter elektrischer Energie in das Wechselspannungsnetz 1 analog zu Figur 2. Für den hochpotentialseitigen Halbleiterschalter SP1 wird ein Schalterwinkelbereich W1 = [60°,120°] vorgegeben, an dessen Mittelpunkt die Wechselspannung U1 ihr Maximum während einer Winkelperiode eines Phasenwinkels ϕ annimmt. Für den niederpotentialseitigen Halbleiterschalter SN1 wird ein Schalterwinkelbereich W2 = [240°,300°] vorgegeben, an dessen Mittelpunkt die Wechselspannung U1 ihr Minimum während einer Winkelperiode des Phasenwinkels ϕ annimmt. Analog zu dem anhand von Figur 2 beschriebenen Verfahren wird für den Schalterwinkelbereich W1 ein Aktivierungswinkelintervall A1 bestimmt, in dem der Halbleiterschalter SP1 durch das Ansteuersignal UP1 eingeschaltet wird, und für den Schalterwinkelbereich W2 wird ein Aktivierungswinkelintervall A2 bestimmt, in dem der Halbleiterschalter SN1 durch das Ansteuersignal UN1 eingeschaltet wird. Beispielhaft ist ferner wiederum ein Schalterstrom ISP1 durch den Halbleiterschalter SP1 dargestellt.

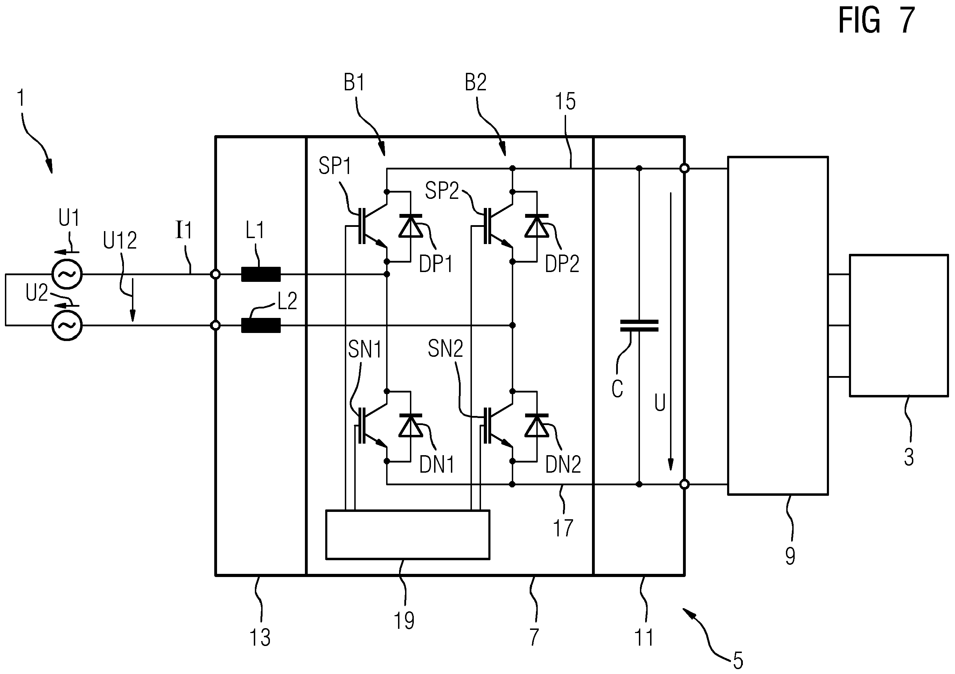

Figur 7 (FIG 7) zeigt ein zweites Beispiel eines zwischen einem einphasigen Wechselspannungsnetz 1 und einem Elektromotor 3 betriebenen Umrichters 5. Im Unterschied zu dem in Figur 5 gezeigten Beispiel weist der netzseitige Stromrichter 7 des Umrichters 5 zwei Halbbrücken B1, B2 auf, wobei eine erste Halbbrücke B1 über eine erste Induktivität L1 der Netzdrosseleinheit 13 mit dem positiven Potential der Wechselspannung U1 des Wechselspannungsnetzes 1 verbunden ist und die zweite Halbbrücke B2 über eine zweite Induktivität L2 der Netzdrosseleinheit 13 mit dem negativen Potential der Wechselspannung U2 des Wechselspannungsnetzes 1 verbunden ist. Jede Halbbrücke weist einen hochpotentialseitigen Halbleiterschalter SP1, SP2, einen niederpotentialseitigen Halbleiterschalter SN1, SN2 sowie dazu jeweils eine antiparallel geschaltete Diode DP1, DP2, DN1, DN2 auf.

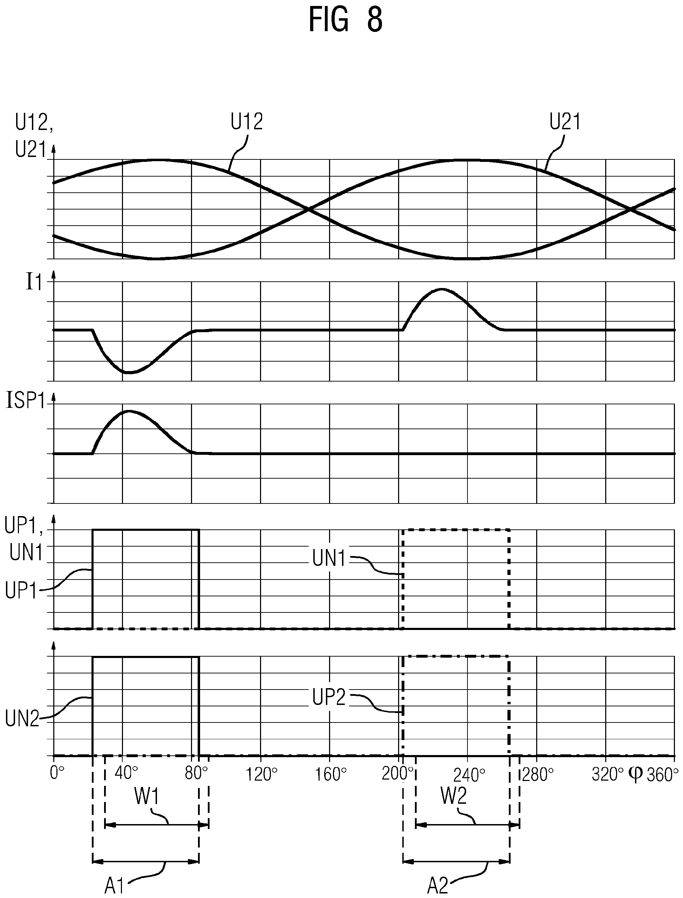

Figur 8 (FIG 8) illustriert das Betreiben des in Figur 7 gezeigten Stromrichters 7 als Wechselrichter gemäß dem erfindungsgemäßen Verfahren zum Rückspeisen von dem Elektromotor 3 im generatorischen Betrieb erzeugter elektrischer Energie in das Wechselspannungsnetz 1 analog zu den Figuren 2 und 6. Es werden ein erster Schalterwinkelbereich W1 = [30°,90°], an dessen Mittelpunkt die Wechselspannung U12 ihr Maximum während einer Winkelperiode eines Phasenwinkels ϕ animmt, und ein zweiter Schalterwinkelbereich W2 = [210°,270°], an dessen Mittelpunkt die Wechselspannung U21 ihr Maximum während einer Winkelperiode des Phasenwinkels ϕ animmt, vorgegeben. Analog zu dem anhand von Figur 2 beschriebenen Verfahren wird für den Schalterwinkelbereich W1 ein Aktivierungswinkelintervall A1 bestimmt, in dem der Halbleiterschalter SP1 durch das Ansteuersignal UP1 und der Halbleiterschalter SN2 durch das Ansteuersignal UN2 eingeschaltet werden, und für den Schalterwinkelbereich W2 wird ein Aktivierungswinkelintervall A2 bestimmt, in dem der Halbleiterschalter SP2 durch das Ansteuersignal UP2 und der Halbleiterschalter SN1 durch das Ansteuersignal UN1 eingeschaltet werden. Beispielhaft ist ferner wiederum ein Schalterstrom ISP1 durch den Halbleiterschalter SP1 dargestellt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines Stromrichters (7) als Wechselrichter zwischen einer Gleichspannung (U) mit einem Hochpotential und einem Niederpotential und einem Wechselspannungsnetz (1), wobei der Stromrichter (7) für jede Wechselspannungsphase des Wechselspannungsnetzes (1) wenigstens eine mit der Wechselspannungsphase verbundene Halbbrücke (B1, B2, B3) mit einem hochpotentialseitigen Halbleiterschalter (SP1, SP2, SP3) und einem niederpotentialseitigen Halbleiterschalter (SN1, SN2, SN3) aufweist und jeder Halbleiterschalter (SP1, SP2, SP3, SN1, SN2, SN3) antiparallel zu einer Diode (DP1, DP2, DP3, DN1, DN2, DN3) geschaltet ist, wobei
- für jeden Halbleiterschalter (SP1, SP2, SP3, SN1, SN2, SN3) innerhalb einer Winkelperiode eines Phasenwinkels (ϕ) der Wechselspannung wenigstens ein Schalterwinkelbereich (W12, W13, W23, W21, W31, W32, W1, W2) durch eine untere Bereichsgrenze und eine obere Bereichsgrenze vorgegeben wird,
- für jeden Schalterwinkelbereich (W12, W13, W23, W21, W31, W32, W1, W2) ein Vorzündwinkel (α) und ein Vorlöschwinkel (β) bestimmt werden,
- für jeden Schalterwinkelbereich (W12, W13, W23, W21, W31, W32, W1, W2) ein Aktivierungswinkelintervall (A12, A13, A23, A21, A31, A32, A1, A2) bestimmt wird, dessen untere Intervallgrenze durch Subtraktion des Vorzündwinkels (α) von der unteren Bereichsgrenze des Schalterwinkelbereichs (W12, W13, W23, W21, W31, W32, W1, W2) gebildet wird und dessen obere Intervallgrenze durch Subtraktion des Vorlöschwinkels (β) von der oberen Bereichsgrenze des Schalterwinkelbereichs (W12, W13, W23, W21, W31, W32, W1, W2) gebildet wird, und
- jeder Halbleiterschalter (SP1, SP2, SP3, SN1, SN2, SN3) während jedes für ihn bestimmten Aktivierungswinkelintervalls (A12, A13, A23, A21, A31, A32, A1, A2) eingeschaltet wird.

2. Verfahren nach Anspruch 1, wobei der Vorzündwinkel (α) und der Vorlöschwinkel (β) eines Schalterwinkelbereichs (W12, W13, W23, W21, W31, W32, W1, W2) eines Halbleiterschalters (SP1, SP2, SP3, SN1, SN2, SN3) jeweils als Summe eines Vorsteuerwertes und eines Korrekturwertes bestimmt werden, wobei die Vorsteuerwerte in Abhängigkeit von einer von dem Stromrichter (7) in das Wechselspannungsnetz (1) zu übertragenden elektrischen Leistung bestimmt werden und durch die Korrekturwerte ein Strom nachgeregelt wird, der in dem Brückenarm derjenigen Halbbrücke (B1, B2, B3) fließt, in dem der Halbleiterschalter (SP1, SP2, SP3, SN1, SN2, SN3) angeordnet ist.

3. Verfahren nach einem der vorhergehenden Ansprüche, wobei der Vorzündwinkel (α) und der Vorlöschwinkel (β) eines Schalterwinkelbereichs (W12, W13, W23, W21, W31, W32, W1, W2) eines Halbleiterschalters (SP1, SP2, SP3, SN1, SN2, SN3) derart bestimmt werden, dass das Aktivierungswinkelintervall (A12, A13, A23, A21, A31, A32, A1, A2) zu einem Diodenleitwinkelintervall (D12, D13) korrespondiert, in dem die antiparallel zu dem Halbleiterschalter (SP1, SP2, SP3, SN1, SN2, SN3) geschaltete Diode (DP1, DP2, DP3, DN1, DN2, DN3) in einem Betrieb des Stromrichters (7) als Gleichrichter mit zu dem Betrieb des Stromrichters (7) als Wechselrichter vergleichbaren Lastbedingungen stromdurchflossen ist.

4. Verfahren nach Anspruch 3, wobei die Intervallgrenzen des Aktivierungswinkelintervalls (A12, A13, A23, A21, A31, A32, A1, A2) im Wesentlichen durch eine Spiegelung der Intervallgrenzen des korrespondierenden Diodenleitwinkelintervalls (D12, D13) an dem Mittelpunkt des Schalterwinkelbereichs (W12, W13, W23, W21, W31, W32, W1, W2) hervorgehen.

5. Verfahren nach einem der vorhergehenden Ansprüche, wobei der Mittelpunkt eines Aktivierungswinkelintervalls (A12, A13, A23, A21, A31, A32, A1, A2) gegenüber dem Mittelpunkt des zugehörigen Schalterwinkelbereichs (W12, W13, W23, W21, W31, W32, W1, W2) zur unteren Bereichsgrenze des Schalterwinkelbereichs (W12, W13, W23, W21, W31, W32, W1, W2) hin verschoben wird.

6. Verfahren nach einem der vorhergehenden Ansprüche, wobei das Wechselspannungsnetz (1) mehrphasig ist und für jeden Halbleiterschalter (SP1, SP2, SP3, SN1, SN2, SN3) innerhalb einer Winkelperiode eines Phasenwinkels (ϕ) der Wechselspannung wenigstens zwei Schalterwinkelbereiche (W12, W13, W23, W21, W31, W32) durch jeweils eine untere Bereichsgrenze und eine obere Bereichsgrenze vorgegeben werden.

7. Verfahren nach Anspruch 6, wobei die Schalterwinkelbereiche (W12, W13, W23, W21, W31, W32) in Abhängigkeit von verketteten Spannungen (U12, U13, U23, U21, U31, U32) der Wechselspannungsphasen vorgegeben werden.

8. Verfahren nach Anspruch 7, wobei jeder Schalterwinkelbereich (W12, W13, W23, W21, W31, W32) eines hochpotentialseitigen Halbleiterschalters (SP1, SP2, SP3) als ein Phasenwinkelbereich vorgegeben wird, in dem die verkettete Spannung (U12, U13, U23, U21, U31, U32) zwischen der mit dem Halbleiterschalter (SP1, SP2, SP3) verbundenen Wechselspannungsphase und einer weiteren Wechselspannungsphase eine größte aller verketteten Spannungen (U12, U13, U23, U21, U31, U32) ist.

9. Verfahren nach Anspruch 7 oder 8, wobei jeder Schalterwinkelbereich (W12, W13, W23, W21, W31, W32) eines niederpotentialseitigen Halbleiterschalters (SN1, SN2, SN3) als ein Phasenwinkelbereich vorgegeben wird, in dem die verkettete Spannung (U12, U13, U23, U21, U31, U32) zwischen der mit dem Halbleiterschalter (SN1, SN2, SN3) verbundenen Wechselspannungsphase und einer weiteren Wechselspannungsphase eine kleinste aller verketteten Spannungen (U12, U13, U23, U21, U31, U32) ist.

10. Verfahren nach einem der Ansprüche 1 bis 5, wobei das Wechselspannungsnetz (1) einphasig ist und für jeden hochpotentialseitigen Halbleiterschalter (SP1, SP2) innerhalb einer Winkelperiode eines Phasenwinkels (ϕ) der mit dem Halbleiterschalter (SP1, SP2) verbundenen Wechselspannung (U1, U12, U21) ein Schalterwinkelbereich (W1, W2) vorgegeben wird, so dass die Wechselspannung (U1, U12, U21) in dem Schalterwinkelbereich (W1, W2) ein Maximum aufweist.

11. Verfahren nach Anspruch 10, wobei für jeden niederpotentialseitigen Halbleiterschalter (SN1, SN2) innerhalb einer Winkelperiode eines Phasenwinkels (ϕ) der mit dem Halbleiterschalter (SN1, SN2, SN3) verbundenen Wechselspannung (U1, U12, U21) ein Schalterwinkelbereich (W1, W2) vorgegeben wird, so dass die Wechselspannung (U1, U12, U21) in dem Schalterwinkelbereich (W1, W2) ein Minimum aufweist.

12. Stromrichter (7) zwischen einer Gleichspannung (U) mit einem Hochpotential und einem Niederpotential und einem Wechselspannungsnetz (1), der Stromrichter (7) umfassend
- für jede Wechselspannungsphase des Wechselspannungsnetzes (1) wenigstens eine mit der Wechselspannungsphase verbundene Halbbrücke (B1, B2, B3) mit einem hochpotentialseitigen Halbleiterschalter (SP1, SP2, SP3) und einem niederpotentialseitigen Halbleiterschalter (SN1, SN2, SN3),
- für jeden Halbleiterschalter (SP1, SP2, SP3, SN1, SN2, SN3) eine antiparallel zu dem Halbleiterschalter (SP1, SP2, SP3, SN1, SN2, SN3) geschaltete Diode (DP1, DP2, DP3, DN1, DN2, DN3), und
- eine Steuereinheit (19), die eingerichtet ist, in einem Betrieb des Stromrichters (7) als Wechselrichter gemäß dem Verfahren nach einem der vorhergehenden Ansprüche für jeden Halbleiterschalter (SP1, SP2, SP3, SN1, SN2, SN3) innerhalb einer Winkelperiode eines Phasenwinkels (ϕ) der Wechselspannung den wenigstens einen Schalterwinkelbereich (W12, W13, W23, W21, W31, W32, W1, W2) vorzugeben, für jeden Schalterwinkelbereich (W12, W13, W23, W21, W31, W32, W1, W2) das Aktivierungswinkelintervall (A12, A13, A23, A21, A31, A32, A1, A2) zu bestimmen und jeden Halbleiterschalter (SP1, SP2, SP3, SN1, SN2, SN3) während jedes für ihn bestimmten Aktivierungswinkelintervalls (A12, A13, A23, A21, A31, A32, A1, A2) einzuschalten.

13. Computerprogramm, umfassend Befehle, die bei der Ausführung des Computerprogramms durch eine Steuereinheit (19) diese veranlassen, das Verfahren nach einem der Ansprüche 1 bis 11 auszuführen.

14. Verwendung eines Stromrichters (7) nach Anspruch 12 als Teil eines Umrichters (5), der zur Energieversorgung eines Elektromotors (3) aus dem Wechselspannungsnetz (1) eingerichtet ist, wobei der Stromrichter (7) zum Rückspeisen von Energie des Elektromotors (3) in das Wechselspannungsnetz (1) gemäß dem Verfahren nach einem der Ansprüche 1 bis 11 betrieben wird.
